# EUROPEAN PATENT APPLICATION

(11) **EP 4 752 415 A1**
(43) Date of publication of application: **03.06.2026**
(21) Application number: 24215959.8
(22) Date of filing: 28.11.2024
(51) Int. Cl.: F16K 24/04

(54) **AIR VENT VALVE AND AIR VENT SYSTEM FOR THE USE IN A (BIO)PHARMACEUTICAL PROCESS AS WELL AS USE OF AN AIR VENT VALVE**

(71) Applicant: Sartorius Stedim Biotech GmbH, 37079 Göttingen (DE)
(72) Inventor: STEIN, Dominik, 37079 Göttingen (DE); HEISE, Heino, 37079 Göttingen (DE)
(74) Representative: Cohausz & Florack

(57) **Abstract**

Described and illustrated is a air vent valve (1) for the use in a (bio)pharmaceutical process, comprising: a first housing (2), a first interior chamber (5) arranged within the first housing, a first inlet (3) for conveying air and/or liquid medium to the first interior chamber (5), a first outlet (4) for conveying air away from the first interior chamber (5), and a first floating member (6) for sealing the first outlet (4), wherein the first inlet (3) and the first outlet (3) are respectively connected via a fluidic connection with the first interior chamber (5), and wherein the first floating member (6) is arranged movable within the first interior chamber (5). To improve air vent valves, preferably to provide a less complex air vent valve, the describe air vent valve it is proposed.

## Description

The present invention relates to an air vent valve for the use in a (bio)pharmaceutical process, comprising: a first housing, a first interior chamber arranged within the first housing, a first inlet for conveying air and/or liquid medium to the first interior chamber, a first outlet for conveying air away from the first interior chamber, and a first floating member for sealing the first outlet, wherein the first inlet and the first outlet are respectively connected via a fluidic connection with the first interior chamber, and wherein the first floating member is arranged movable within the first interior chamber.

The present invention further relates to an air vent system for the use in a (bio)pharmaceutical process, comprising: a conduit for conveying liquid medium, one or more air vent valves connected to the conduit via a fluidic connection, and a consuming device, preferably a chemical reactor, a bioreactor, a filtration system and/or a chromatographic separation system, for consuming liquid medium conveyed by the conduit.

The present invention further relates to the use of an air vent valve as defined in any one of claims 1 to 12, preferably use of an air vent system as defined in any one of claims 13 to 15, for the automatized processing or production process of a (bio)pharmaceutical product, wherein the process is conducted at least partially in a system for separation and/or purification of a one or more target molecule comprising a filtration and/or diafiltration unit, preferably a tangential flow filtration unit, and/or a chromatography unit and/or at least partially in a system for buffer exchange and/or concentration of one or more target molecule in a diafiltration unit.

(Bio)pharmaceutical processes, for example an automatized production process of a (bio)pharmaceutical product, usually require the use of equipment for guiding at least one liquid medium, for example for separation or purification purposes. Currently the air removal from such equipment is solved with a bubble trap usually, involving high volume and thus back mixing and process disadvantages, or a filter which is then vented based on a sensor signal and at least one automated air vent valve actuated based on the sensor signal.

However automated air vent valves are technically complex and expensive. For example, such automated air vent valves can comprise an air sensor, which is error prone, needs additional space and adds additional mechanical and automation complexity. Due to their complexity and cost, these automated air vent valves are also not suitable as single-use air vent valves. In addition, such automated air vent valves usually need manual calibration, when calibrating the automated air vent valve there is a high consumption of calibration solution. Moreover, calibration usually comes with the requirement to document the calibration, which increases the workload in conjunction with these automated air vent valves. Furthermore, a wrong calibration procedure, for example due to a mistake, and/or expired or wrong calibration solution can render the calibration useless.

Against this background, it is an object of the present invention to provide an improved, preferably less complex, air vent valve and air vent system.

The object named above is solved in accordance with the present invention by the air vent valve according to claim 1.

The object named above is further solved in accordance with the present invention by the air vent system in that the one or more air vent valves are air vent valves according to any one of claims 1 to 12.

Moreover, it is an object of the present invention to use an improved, in particular less complex, air vent valve, preferably air vent system.

The object named above is solved in accordance with the present invention by the use of an air vent valve, preferably air vent system, according to claim 16.

Various embodiments of the air vent valve, the air vent system and the use of the air vent valve, preferably air vent system, are described in the following. The individual embodiments are in each case individually applicable to the air vent valve, the air vent system and/or the use of the air vent valve, preferably air vent system. The individual embodiments may furthermore be combined with each other at will.

The air vent valve for the use in a (bio)pharmaceutical process comprises: a first housing, a first interior chamber arranged within the first housing, a first inlet for conveying air and/or liquid medium to the first interior chamber, a first outlet for conveying air away from the first interior chamber, and a first floating member for sealing the first outlet. The first inlet and/or the first outlet can for example be designed to connect to a conduit and/or a further air vent valve. The first floating member can seal the first outlet by contacting, preferably the sidewall of, the first interior chamber and/or the first outlet. The first floating member is preferably designed for floating in liquid medium to be provided in the air vent valve, preferably the first interior chamber. The air vent valve is preferably a single-use air vent valve. In this way time consuming cleaning after the use of the air vent valve is not intended.

In the present disclosure the term "single-use", in particular in context with the air vent valve, refers to that element being configured to be replaced or discarded after each use, and not being intended to be re-used. Furthermore, the term "(bio)pharmaceutical process" is to be understood as "pharmaceutical process, preferably biopharmaceutical process".

Moreover, with the air vent valve it is provided that the first inlet and the first outlet are respectively connected via a fluidic connection with the first interior chamber and that the first floating member is arranged movable within the first interior chamber. By providing the floating member movably in the first interior chamber, an automated venting can be provided, in particular without the need for complex mechanisms or additional components, for example sensors. The principle of the air vent valve is preferably based on an equilibrium of forces. These forces can comprise mass forces, buoyancy forces and pressure forces. The mass forces are in particular based on the physical properties of the floating member, such as shape, material and/or density. The buoyancy forces are in particular based on the geometry of the first floating member and the properties of the liquid medium to be provided in the air vent valve. The pressure forces are in particular based on the pressure of the liquid medium to be provided in the air vent valve. If the mass forces and buoyancy forces are equal or the buoyancy forces are greater than the mass forces the first floating member will rise with the level of the liquid medium. Following this, at a certain point the first floating member will be pressed against a stop, for example formed by the first interior chamber and/or the first outlet, sealing the interior chamber and thus closing the air vent valve. The first floating member can be movable between a sealing position for sealing the first outlet and at least one open position allowing a fluidic flow between the first interior chamber and the first outlet. The outer diameter of the first floating member is preferably smaller than the inner diameter of the first interior chamber and/or the first floating member is elastically deformable. In this way it can be provided in a simple manner that air can flow around the first floating member when the first floating member is in the open position. The first inlet, the first outlet and/or the first interior chamber can be formed at least in sections by the first housing.

Furthermore, it can be provided to adjust the diameter of the first inlet and/or the first outlet. By increasing the diameter of the respective inlet, the air entry into the air vent valve, in particular the respective associated interior chamber, can be increased. Adjusting the diameter of the respective outlet, thus preferably also adjusting the sealing point where the respective associated floating member contacts the respective associated interior chamber and/or outlet, can influence the sealing pressure. As the sealing pressure depends on the area of contact between the floating member and the interior chamber and/or outlet as well as the forces present, decreasing the diameter of the respective outlet would increase the sealing pressure, while increasing would decrease the sealing pressure (assuming the diameter of the respective floating member remains unchanged). This could for example be utilized to use the same respective floating member for different pressure ranges of the liquid medium by adjusting the diameter of the respective inlet and/or outlet. For example, it could be provided that the diameter of the first inlet, preferably at least adjacent to the first interior chamber, is smaller than the diameter of the first outlet, preferably at least adjacent to the first interior chamber, or the diameter of the first outlet, preferably at least adjacent to the first interior chamber, is smaller than the diameter of the first inlet, preferably at least adjacent to the first interior chamber. It could also be provided that the diameter of the first outlet adjacent to the first interior chamber is smaller or larger than the diameter of the first outlet further upstream of and/or further spaced apart from the first interior chamber and/or the diameter of the first outlet at least in sections, preferably further upstream of and/or further spaced apart from the first interior chamber, corresponds to the diameter of the first inlet, preferably adjacent to the first interior chamber. In this way the sealing pressure can be adjusted.

The term "air" as used in the present disclosure is not understood in a strict sense to only comprise air but is intended to comprise any gaseous medium. However, the term "air" can preferably only refer to air in the conventional sense, in particular refer to the mixture of gases in the earth's atmosphere.

The terms "first", "second" and "third" are used in the present disclosure only to distinguish between different features, for example the first housing, the second housing and the third housing, and should not be interpreted in a restrictive manner, in particular with regard to the number and/or order of the features described by these terms, unless otherwise stated in the present disclosure.

In an embodiment it is provided that the air vent valve comprises a second housing, a second interior chamber arranged within the second housing, a second inlet for conveying air and/or liquid medium to the second interior chamber, a second outlet for conveying air away from the second interior chamber, and a second floating member for sealing the second outlet, wherein the second inlet and the second outlet are respectively connected via a fluidic connection with the second interior chamber, and wherein the second floating member is arranged movable within the second interior chamber. The second inlet and/or the second outlet can for example be designed to connect to a conduit and/or a further air vent valve. The second floating member can seal the second outlet by contacting, preferably the sidewall of, the second interior chamber and/or the second outlet. The second floating member is preferably designed for floating in liquid medium to be provided in the air vent valve, preferably the second interior chamber. The second floating member can be movable between a sealing position for sealing the second outlet and at least one open position allowing a fluidic flow between the second interior chamber and the second outlet. The outer diameter of the second floating member is preferably smaller than the inner diameter of the second interior chamber and/or the second floating member is elastically deformable. In this way it can be provided in a simple manner that air can flow around the second floating member when the second floating member is in the open position. The second inlet, the second outlet and/or the second interior chamber can be formed at least in sections by the second housing.

Alternatively or in addition the air vent valve comprises a third housing, a third interior chamber arranged within the third housing, a third inlet for conveying air and/or liquid medium to the third interior chamber, a third outlet for conveying air away from the third interior chamber, and a third floating member for sealing the third outlet, wherein the third inlet and the third outlet are respectively connected via a fluidic connection with the third interior chamber, and wherein the third floating member is arranged movable within the third interior chamber. The third inlet and/or the third outlet can for example be designed to connect to a conduit and/or a further air vent valve. The third floating member can seal the third outlet by contacting, preferably the sidewall of, the third interior chamber and/or the third outlet. The third floating member is preferably designed for floating in liquid medium to be provided in the air vent valve, preferably the third interior chamber. The third floating member can be movable between a sealing position for sealing the third outlet and at least one open position allowing a fluidic flow between the third interior chamber and the third outlet. The outer diameter of the third floating member is preferably smaller than the inner diameter of the third interior chamber and/or the third floating member is elastically deformable. In this way it can be provided in a simple manner that air can flow around the third floating member when the third floating member is in the open position. The third inlet, the third outlet and/or the third interior chamber can be formed at least in sections by the third housing.

By providing the respective second and/or third elements the effects described in conjunction with the first housing, the first interior chamber, the first inlet, the first outlet and/or the first floating member are realized. In addition, when preferably the first interior chamber, the second interior chamber and/or the third interior chamber are connected to each other via a fluidic connection, each of the interior chambers, inlets, outlets and/ floating members can be respectively adapted for venting at an at least in sections different pressure range of the liquid medium. In this way a reliable venting can be provided for different pressure ranges of the liquid medium. For example, the first interior chamber, the first floating member, the first inlet and/or the first outlet can be designed to allow for the first floating member to be in the open position for at least in sections higher pressure ranges of the liquid medium to be provided in the air vent valve than the second floating member. Alternatively or in addition the second interior chamber, the second floating member, the second inlet and/or the second outlet can be designed to allow for the second floating member to be in the open position for at least in sections higher pressure ranges of the liquid medium to be provided in the air vent valve than the third floating member. In this way the first floating will be moved later to the sealing position than the second floating member and/or the third floating member. Thus, it is ensured that air is vented from the conduit to the first interior chamber and from there preferably to the second interior chamber and/or third interior chamber. At the same time the second floating member and/or the third floating member can already be in the sealing position preventing ambient air to be introduced into the air vent valve. It can be provided that the air vent valve comprises an axis of extension and that, preferably, the first housing, the second housing, the third housing, the first interior chamber, the second interior chamber and/or the third interior chamber are arranged, preferably one after the other, along the axis of extension. The axis of extension is preferably the longitudinal axis and/or the central axis of the air vent valve. It can alternatively or in addition be provided that the second interior chamber and/or the third interior chamber is arranged, preferably along a flow path of the air vent valve, downstream of the first interior chamber and/or the third interior chamber is arranged, preferably along a flow path of the air vent valve, downstream of the first interior chamber and/or the second interior chamber.

Furthermore, it can be provided to adjust the diameter of the second inlet, the second outlet, the third inlet and/or the third outlet. The technical effects described in conjunction with the adjustment of the first inlet and/or first outlet can be applied respectively in this case. For example, it could be provided that the diameter of the second inlet, preferably at least adjacent to the second interior chamber, is smaller than the diameter of the second outlet, preferably at least adjacent to the second interior chamber, or the diameter of the second outlet, preferably at least adjacent to the second interior chamber, is smaller than the diameter of the second inlet, preferably at least adjacent to the second interior chamber. Alternatively or in addition the diameter of the third inlet, preferably at least adjacent to the third interior chamber, is smaller than the diameter of the third outlet, preferably at least adjacent to the third interior chamber, or the diameter of the third outlet, preferably at least adjacent to the third interior chamber, is smaller than the diameter of the third inlet, preferably at least adjacent to the third interior chamber. It could also be provided that the diameter of the second outlet adjacent to the second interior chamber is smaller or larger than the diameter of the second outlet further upstream of and/or further spaced apart from the second interior chamber and/or the diameter of the second outlet at least in sections, preferably further upstream of and/or further spaced apart from the second interior chamber, corresponds to the diameter of the second inlet, preferably adjacent to the second interior chamber. Alternatively or in addition the diameter of the third outlet adjacent to the third interior chamber is smaller or larger than the diameter of the third outlet further upstream of and/or further spaced apart from the third interior chamber and/or the diameter of the third outlet at least in sections, preferably further upstream of and/or further spaced apart from the third interior chamber, corresponds to the diameter of the third inlet, preferably adjacent to the third interior chamber. In this way the sealing pressure can be adjusted.

In an embodiment it is provided for the air vent valve that the first outlet is connected to the second inlet via a fluidic connection, the second outlet is connected to the third inlet via a fluidic connection, the first interior chamber is connected to the second interior chamber via a fluidic connection and/or the second interior chamber is connected to the third interior chamber via a fluidic connection. In this way liquid medium and/or air can be transferred between the different interior chambers. It can be provided that the first outlet forms at least in sections the second inlet and vice versa and/or the second outlet forms at least in sections the third inlet and vice versa. It can also be provided that the first housing forms at least in sections the second housing and vice versa and/or the second housing forms at least in sections the third housing and vice versa. In this way a compact air vent valve can be provided in a simple manner.

Alternatively or in addition it is provided that the first outlet and the second inlet are integrally connected to each other and/or the second outlet and the third inlet are integrally connected to each other. In this way a compact air vent valve with multiple interior chambers can be provided, as there is no need for a space consuming connection element, allowing for a detachable connection.

Alternatively or in addition it is provided that the first outlet and the second inlet are detachably connected to each other and/or the second outlet and the third inlet are detachably connected to each other. In this way different sections of the air vent valve can be added or detached from each other at will, allowing for stacking of different interior chambers, floating members, inlets, outlets and/or housings to adapt the air vent valve for a certain application.

In an embodiment it is provided for the air vent valve that the second housing and/or the second interior chamber is arranged at least in sections laterally offset with respect to the first housing and/or the first interior chamber, in that the third housing and/or the third interior chamber is arranged at least in sections laterally offset with respect to the second housing and/or the second interior chamber, and/or in that the first housing, the second housing and the third housing are arranged in a zig-zag pattern relative to each other and/or the first interior chamber, the second interior chamber and the third interior chamber are arranged in a zig-zag pattern relative to each other. By arranging the housings and/or interior chambers in this way a compact air vent valve can be provided even though the air vent valve comprises multiple interior chambers and/or housings.

Alternatively or in addition it can be provide that the second housing and/or the third housing is at least in sections spaced apart from the first housing along the axis of extension, that the third housing is at least in sections spaced apart from the first housing and/or second housing along the axis of extension, that the second interior chamber and/or the third interior chamber is at least in sections spaced apart from the first interior chamber along the axis of extension, that the third interior chamber is at least in sections spaced apart from the first interior chamber and/or second interior chamber along the axis of extension, that the second housing is radially spaced apart with respect to the axis of extension at least in sections from the first housing and/or third housing, that the third housing is radially spaced apart with respect to the axis of extension at least in sections from the first housing and/or second housing, that the second interior chamber is radially spaced apart with respect to the axis of extension at least in sections from the first interior chamber and/or third interior chamber, that the third interior chamber is radially spaced apart with respect to the axis of extension at least in sections from the first interior chamber and/or second interior chamber, that the first housing and the third housing are radially equally positioned with respect to axis of extension, and/or that the first interior chamber and the third interior chamber are radially equally positioned with respect to axis of extension. In this way also a compact air vent valve can be provided even though multiple interior chambers and/or housings are provided in the air vent valve. It can also be provided that along the axis of extension the first outlet is arranged at least in sections higher than the second inlet and/or the second outlet is arranged at least in sections higher than the third inlet. In this way it can be provided that a certain amount of liquid medium remains in the second interior chamber and/or third interior chamber, even if the previous interior chamber is temporarily not fully filled with liquid medium.

The term "higher" or "lower" in conjunction with the axis of extension are used within the disclosure merely to describe a relative positioning along the axis of extension.

In an embodiment it is provided that the air vent valve comprises a first projection projecting from the first housing into the first interior chamber, wherein the first projection has a first cavity connected to the first outlet and the first interior chamber respectively via a fluidic connection, and wherein, preferably, the first projection is at least in sections stiffer than the first housing and/or the first floating member and/or the first projection is at least in sections less stiff than the first housing and/or the first floating member, a second projection projecting from the second housing into the second interior chamber, wherein the second projection has a second cavity connected to the second outlet and the second interior chamber respectively via a fluidic connection, and wherein, preferably, the second projection is at least in sections stiffer than the second housing and/or the second floating member or the second projection is at least in sections less stiff than the second housing and/or the second floating member, and/or a third projection projecting from the third housing into the third interior chamber, wherein the third projection has a third cavity connected to the third outlet and the third interior chamber respectively via a fluidic connection, and wherein, preferably, the third projection is at least in sections stiffer than the third housing and/or the third floating member or the third projection is at least in sections less stiff than the third housing and/or the third floating member. The respective projection can act as a damper for damping a movement of the floating member. On the one hand air provided in the cavity of the respective projection, in particular when the respective floating member is in the sealing position or is moving into the sealing position, can dampen a movement of the floating member. This is in particular the case when the projection is at least in sections stiffer than the respective associated housing and/or floating member, as the projection and therefore the cavity can then not or only to a smaller extend be compressed by the floating member. On the other hand, the respective projection itself can dampen the movements of floating member, in particular when the respective projection is less stiff than the respective housing and/or floating member. In this case the compression of the projections provides the damping. In addition, the respective projection can also act as a bubble trap and air provided in the respective cavities can dampen pressure spikes of the liquid medium, wherein these effects can be enhanced by providing multiple projections. Preferably the respective cavity is formed at least in sections within the respective associated projection and/or the respective cavity is designed for accommodating air. Alternatively or in addition, it is provided that the air vent valve only comprises one projection, preferably only the first projection. This is in particular preferably when the first interior chamber is the most downstream interior chamber of the air vent valve and/or when the first interior chamber is the lowest of the interior chambers along the axis of extension. Providing only one projection can reduce the risk of fouling of the liquid medium, as each projection and thus each cavity filled with air increases the risk of fouling of the liquid medium due to the air.

The term "associated" is used in this disclosure to describe elements of the same sub-part ("first", "second" and "third") of the air vent valve. For example, the first housing is the associated housing of the first inlet, first outlet, first interior chamber and/or first floating member.

In an embodiment it is provided for the air vent valve that the mass of the first floating member is higher than the mass of the second floating member and/or the third floating member and/or in that the mass of the second floating member is lower than the mass of the first floating member and/or higher than the mass of the third floating member. In this way the respective floating members can be adapted for venting at an at least in sections different pressure range of the liquid medium and/or to be in the sealing position in at least in sections different pressure ranges. In the embodiment described above the first floating member would be provided for being in the sealing position at higher pressures of the liquid medium than the second floating member and/or the third floating member and the second floating member would be in the sealing position at higher pressures of the liquid medium than the third floating member.

Alternatively or in addition it is provided for the air vent valve that the first floating member, the second floating member and/or the third floating member respectively comprise an interior cavity, wherein, preferably, the interior cavity comprises at least 30 %, preferably at least 60 %, in particular at least 95 %, of the volume of the respective floating member, and/or in that the first floating member, the second floating member and/or the third floating member is respectively designed solid. In this way the buoyancy and thus preferably the pressure range of the liquid medium at which the respective floating member is in the sealing position or open position, can be set. In case of a solid floating member, the respective floating member does not comprise an interior cavity.

In an embodiment it is provided for the air vent valve that the first floating member, the second floating member and/or the third floating member is respectively at least in sections, preferably entirely, shaped spherical. In this way a floating member can be provided that can withstand high pressures. In addition, the spherical shape simplifies sealing via the floating member, as the spherical shape can be used for sealing outlets with a plurality of different shapes.

Alternatively or in addition it can be provided that the first floating member, the second floating member and/or the third floating member, preferably a first end of the first floating member, the second floating member and/or the third floating member for closing off the respective associated outlet, is respectively at least in sections cone-shaped. This also provides a floating member which can withstand high pressures, while at the same time being easier to produce. The cone-shape can also simplify the sealing via the floating member.

Alternatively or in addition it can be provided that the first floating member, the second floating member and/or the third floating member, preferably a second end of the first floating member, the second floating member and/or the third floating member, is respectively at least in sections cylindrical shaped. In this way an easy to produce floating member can be provided and preferably a thinner floating member with the same volume can be provided.

Alternatively or in addition it can be provided that the volume of the first floating member, the second floating member and/or the third floating member is at least 20 %, preferably at least 50 %, in particular at least 90 %, of the volume of the respective associated interior chamber. By providing a respectively designed floating member the dead volume in the air vent valve can be reduced. In addition, by filling a respective part of the volume of the interior chamber with the respective floating member, the desired buoyancy can be set.

In an embodiment it is provided for the air vent valve that the first interior chamber, the second interior chamber and/or the third interior chamber, preferably at least one end, in particular two ends, of the first interior chamber, the second interior chamber and/or the third interior chamber, is respectively at least in sections shaped spherical and/or conical. This provides a stable interior chamber, in particular when high pressure forces of the liquid medium are applied to the sidewall of the interior chamber. Moreover, this can simplify a satisfactory sealing with the respective floating member, in particular if the respective floating member is spherical and/or cone-shaped, as the floating member can be guided by the shape of the interior chamber towards the outlet to be sealed. Preferably it is provided that the respective inner sidewall of the first interior chamber, the second interior chamber and/or the third interior chamber, preferably at least one end, in particular two ends, of the respective inner sidewall of the first interior chamber, the second interior chamber and/or the third interior chamber, is respectively at least in sections shaped spherical and/or conical.

Alternatively or in addition it can be provided that the first interior chamber, the second interior chamber and/or the third interior chamber, preferably at least one middle section of the first interior chamber, the second interior chamber and/or the third interior chamber, is respectively at least in sections shaped cylindrical. In this way a longer and/or easier to produce interior chamber can be provided. The length of the interior chamber can be used to set the time for moving the respective floating member between the sealing position and the open position. The middle section of the respective interior chamber is preferably the section between the ends of the respective interior chamber and/or between the inlet and outlet of the associated interior chamber. It is preferably provided that the respective inner sidewall of the first interior chamber, the second interior chamber and/or the third interior chamber, preferably at least one middle section of the respective inner sidewall of the first interior chamber, the second interior chamber and/or the third interior chamber, is respectively at least in sections shaped cylindrical.

Alternatively or in addition it can be provided that the first housing, the second housing and/or the third housing is adjacent to at least one end, preferably two ends, of the respective housing and/or the associated interior chamber respectively at least in sections shaped spherical and/or conical. This provides for a stable housing. Preferably it is provided that the respective outer sidewall of the first housing, the second housing and/or the third housing is adjacent to at least one end, preferably two ends, of the respective housing and/or associated interior chamber respectively at least in sections shaped spherical and/or conical.

Alternatively or in addition it can be provided that the first housing, the second housing and/or the third housing, preferably at least one middle section of the first housing, the second housing and/or the third housing, is respectively at least in sections shaped cylindrical. This also provides a stable and easy to produce housing. Preferably it is provided that the respective outer sidewall of the first housing, the second housing and/or the third housing, preferably at least one middle section of the respective outer sidewall of the first housing, the second housing and/or the third housing, is respectively at least in sections shaped cylindrical. The middle section of the respective housing is preferably the section between the ends of the respective housing and/or between the inlet and outlet of the associated housing.

In an embodiment it is provided that the air vent valve comprises a first guide bar arranged at least in sections within the first interior chamber, wherein the first floating member is mounted slidable along the first guide bar, a second guide bar arranged at least in sections within the second interior chamber, wherein the second floating member is mounted slidable along the second guide bar, and/or a third guide bar arranged at least in sections within the third interior chamber, wherein the third floating member is mounted slidable along the third guide bar. By providing a respective guide bar, misalignment of the floating member with respect to the associated outlet can be prevented as well as an unstable movement of the floating member within the respective associated interior chamber, thus ensuring a reliable sealing by the floating member.

In an embodiment it is provided that the air vent valve comprises a first sealing to be contacted by the first floating member, wherein the first sealing is arranged at least in sections within the first interior chamber and/or the first outlet, a second sealing to be contacted by the second floating member, wherein the second sealing is arranged at least in sections within the second interior chamber and/or the second outlet, and/or a third sealing to be contacted by the third floating member, wherein the third sealing is arranged at least in sections within the third interior chamber and/or the third outlet. In this way sealing of the respective interior chamber can be further improved. It is preferably provided that the first sealing is in contact with the first housing and/or sidewall of the first interior chamber, the second sealing is in contact with the second housing and/or sidewall of the second interior chamber and/or the third sealing is in contact with the third housing and/or sidewall of the third interior chamber. This further ensures a reliable sealing.

In an embodiment it is provided for the air vent valve that the first housing, the second housing, the third housing, the first floating member, the second floating member and/or the third floating member are respectively at least in sections manufactured by additive manufacturing and/or injection molding. In this way the respective element can be easily produced. This type of manufacturing is particularly suitable for single-use air vent valves.

Alternatively or in addition it is provided that the first housing, the second housing, the third housing, the first floating member, the second floating member and/or the third floating member are respectively at least in sections made of metal, preferably steel, and/or plastics, preferably polycarbonate and/or polyamide. Producing the respective elements out of metal makes them more durable and easier to clean. This in particular useful for multiple-use air vent valves. Producing the respective elements from plastic is easier and cheaper. This in particular useful for single-use air vent valves.

It is also preferable if the respective outlet and/or inlet are manufactured in the same way and/or made of the same material as the respective associated housing, which simplifies the production.

In an embodiment it is provided for the air vent valve that the first housing, the second housing and/or the third housing respectively comprises a first housing part and a second housing part. This allows for an easier production of the air vent valve, in particular an easier production of the respective associated interior chamber as well as simplified introduction of the respective associated floating member into the interior chamber.

In addition, it is provided that the first housing part and the second housing part of the respective housing are connected to each other, preferably by bonding, in particular adhesive bonding, welding, flange connection, threaded connection, clamping connection, push-connection and/or by a snap-on connection. In this way the housing parts can be connected securely. The respective connection is preferably a fluid tight and/or air tight connection, this ensuring a reliable function of the air vent valve. The connection can comprise a Tri-Clamp, hose barb, aseptic connector such as AseptiQuik^{®}, and/or MPX/MPC connection. The connection can be a force-fitting connection, form-fitting connection and/or material connection.

Alternatively or in addition it is provided that the respective first housing part comprises a first connection groove and/or a first connection projection and/or the respective second housing part comprises a second connection groove and/or a second connection projection. In this way a reliable and easy to produce connection can be provided. The first connection grove and the second connection projection and/or the first connection projection and the second connection groove are preferably provided for mutual engagement and/or to provide a form fitting connection.

In an embodiment it is provided that the air vent valve comprises an air filter, preferably for bacteria, fungal spore and/or virus removal, connected to the first outlet, the second outlet and/or the third outlet via a fluidic connection, wherein, preferably, the air filter has a pore size of at most 0.45 µm, preferably at most 0.2 µm, in particular at most 0.1 µm, and/or wherein, preferably, the air filter has a filtration efficiency that corresponds to the standard according to norm ASTM F838-20. In this way a sterile operation of the air vent valve is simplified. Reducing the pore size further helps increasing the sterility of the air vent valve.

In an embodiment it is provided that the air vent valve comprises a monitoring device for determining whether the air vent valve is closed off or open, wherein, preferably, the monitoring device is configured to determine the position of the first floating member, the second floating member and/or the third floating member within the respective associated interior chamber. In this way the functionality and condition of the air vent valve can be determined and/or monitored. The monitoring device is preferably configured to determine whether the first floating member, the second floating member and/or the third floating is in the respective sealing position and/or open position.

In an embodiment it is provided for the air vent valve that the first housing, the second housing and/or the third housing comprises respectively a membrane, preferably connected to the respective associated interior chamber and/or the ambient air via a fluidic connection. The membrane can be used to additionally automatically vent air via the air vent valve without the need for a complex design, thus increasing the efficiency of the air vent valve.

Optionally it is provided that the membrane comprises a substrate made at least in sections of a plastic fleece, preferably a polyamide fleece, and, preferably, an acrylic copolymer arranged at least in sections within the cavities of the fleece and/or that the membrane has a pore size of at least 0.05 µm, preferably at least 0.1 µm, more preferably at least 0.2 µm, in particular at least 0.5 µm and/or of at most 15 µm, preferably at most 12.5 µm, more preferably at most 10 µm, in particular at most 7.5 µm. In this way a membrane can be provided that is suitable for venting air, which is at the same time fluid tight.

Alternatively or in addition is provided optionally that the protective mesh is arranged adjacent to, preferably in contact with, the membrane. This increases the stability and longevity of the membrane.

The air vent system for the use in a (bio)pharmaceutical process, comprises: a conduit for conveying liquid medium, one or more air vent valves connected to the conduit via a fluidic connection, and a consuming device, preferably a chemical reactor, a bioreactor, a filtration system and/or a chromatographic separation system, for consuming liquid medium conveyed by the conduit, characterized in that the one or more air vent valves are air vent valves according to any one of claims 1 to 12. In this way a system can be provided for use in a (bio)pharmaceutical process which provides a reliable and low complexity venting of air. The consuming device can be designed for fermentation, filtration, perfusion, centrifugation, virus inactivation, chromatography, buffer exchange and/or fill and finish (also referred to as fill/finish). The consuming device can thus comprise a chemical reactor, a bioreactor, a filtration system, a chromatographic separation system, a dosing machine, a filter and/or a membrane.

In an embodiment it is provided for the air vent system that the conduit has a cross-section reduction upstream of and/or adjacent to at least one air vent valve of the one or more air vent valves and, preferably, a cross-section enlargement downstream of the cross-section reduction compared to the cross-section of the conduit upstream of the cross-section reduction. By reducing the cross-section, preferably in connection with a following cross-section enlargement, air contained in the liquid medium can be extracted from the liquid medium. This air can then be vented via the one or more air vent valves. In addition, the enlargement of the cross-section reduces the flow speed of the liquid medium thus giving the air more time to reach, preferably by rising upwards, the one or more air vent valves. The reduced flow speed also helps to keep the speed of the respective one or more floating members in the one or more air vent valves low, thus giving air enough time to flow around the respective one or more floating members before the floating members reach the respective sealing position.

Alternatively or in addition is provided that at least one of the one or more air vent valves is connected via a fluidic connection to the conduit upstream of the consuming device and/or at least one of the one or more air vent valves is connected via a fluidic connection to the conduit downstream of the consuming device. By providing at least one of the one or more air vent valves upstream of the consuming device it can be minimized or even prevented that air influences the process in the consuming device and/or influences sensors, in particular of the consuming device, downstream of the respective one or more air vent valves. By providing at least one of the one or more air vent valves downstream of the consuming device foaming of the liquid medium can be reduced or even prevented. Moreover, providing at least one air vent valve downstream of the consuming device is also suitable when a venting device is arranged lower than at least a section of the conduit downstream of the consuming device and/or a storage vessel for storing the liquid medium, preferably processed in the consuming device, arranged downstream of the consuming device. In this way the air vent valve can prevent air entrapment in the storage vessel. The storage vessel can for example be a single-use bag like Flexboy^{®} or Flexsafe^{®} produced by Sartorius AG, Germany.

In an embodiment it is provided for the air vent system that the conduit has one or more intersections, in that the one or more intersections have respectively at least one inflow section and at least two outflow sections, in that the one or more intersections are T-shaped and/or Y-shaped, in that a first outflow section of the at least two outflow sections is designed for conveying liquid medium at least in sections against the gravity and/or upward and/or a second outflow section of the at least two outflow sections is designed for conveying liquid medium at least in sections with the gravity and/or downward, and in that at least one of the one or more air vent valves is connected via a fluidic connection to the first outflow section and/or the consuming device is connected via a fluidic connection to the second outflow section. In this way air can be guided in a constructive simple manner towards the at least one of the one or more air vent valves, while at the same time fluid with a reduced amount of air or even no air is guided towards the consuming device. A Y-shaped section provides a good guidance for air towards the at least one air vent valve, however, needs more space compared to a T-shaped intersection and may introduce an undesired flow speed vector towards the air vent valve. This flow speed vector can negatively influence the operation of the at least one air vent valve. The T-shaped intersection needs less space and is less likely to introduce an undesired flow speed vector towards the air vent valve. However, the T-shaped intersection is less efficient at guiding air towards the at least one air vent valve.

The use of an air vent valve as defined in any one of claims 1 to 12, preferably use of an air vent system as defined in any one of claims 13 to 15, for the automatized processing or production process of a (bio)pharmaceutical product comprises that the process is conducted at least partially in a system for separation and/or purification of a one or more target molecule comprising a filtration and/or diafiltration unit, preferably a tangential flow filtration unit, and/or a chromatography unit and/or at least partially in a system for buffer exchange and/or concentration of one or more target molecule in a diafiltration unit. The air vent valve, preferably the air vent system, as described before provides a reliable, automatic venting of air, without the need for complex mechanisms to provide the venting and are suitable for a sterile use. Thus, the air vent valve, preferably the air vent system, is very suitable for the use in the processing or production process of a (bio)pharmaceutical product. The at least one air vent valve is also suited for single-use applications, which emphasizes the suitability for the use in the processing or production process of a (bio)pharmaceutical product. The describe chromatography unit can comprise, preferably be, an adsorber chromatography device, preferably a membrane adsorber chromatography device, an anion exchanger chromatography device and/or a cation exchanger chromatography device.

In an embodiment it is provided for the use of an air vent valve, preferably air vent system, the first interior chamber, the second interior chamber, the third interior chamber, the first floating member, the second floating member and/or the third floating member, is at least in section sterilized, preferably by gamma irradiation and/or steam autoclaving. In this way a sterile air vent valve, preferably air vent system, can be reliably ensured.

In an embodiment for the use of an air vent valve, preferably air vent system, it is provided that two liquid mediums with different density are provided within the air vent system. The air vent valve, preferably the air vent system, is adapted for the use with liquids having different densities, in particular when the air vent valve, preferably of the air vent system, has multiple interior chambers and/or floating members. Different interior chambers and/or floating members can then be adapted for each liquid medium.

Alternatively or in addition the pressure in the air vent system, preferably in the conduit, the one or more air vent valves and/or the consuming device, is at 0 bar, preferably at least 2 bar, in particular at least 4 bar and/or at most 8 bar, preferably at most 6 bar, in particular at most 4 bar, and/or wherein, preferably, the temperature in the air vent system, preferably in the conduit, the one or more air vent valves and/or the consuming device, is at least 10 °C, preferably at least 15 °C, in particular at least 20 °C and/or at most 40 °C, preferably at most 30°C, in particular at most 25°C. The air vent valve, preferably the air vent system, is designed to handle these conditions, which conditions often occur during a (bio)pharmaceutical process.

Further features and advantages of the air vent valve, the air vent system and the use of the air vent valve, preferably air vent system, emerge from the following description of exemplary embodiments where reference is made to the attached drawing.

In the drawing
- Fig. 1a: shows a first embodiment of an air vent valve in a side view,
- Fig. 1b: shows the air vent valve of Fig. 1a in a sectional side view,
- Fig. 1c: shows the air vent valve of Fig. 1a in a sectional side view with an additional air filter,
- Fig. 2: shows a second embodiment of an air vent valve in a sectional side view,
- Fig. 3: shows a third embodiment of an air vent valve in a sectional side view,
- Fig. 4: shows a fourth embodiment of an air vent valve in a sectional side view,
- Fig. 5: shows a fifth embodiment of an air vent valve in a sectional side view,
- Fig. 6: shows a sixth embodiment of an air vent valve in a sectional side view,
- Fig. 7a: shows a seventh embodiment of an air vent valve in a sectional side view,
- Fig. 7b: shows a modification of the seventh embodiment of an air vent valve in a sectional side view,
- Fig. 8: shows a first embodiment of an air vent system in a sectional side view, and
- Fig. 9: shows a second embodiment of an air vent system in a sectional side view.

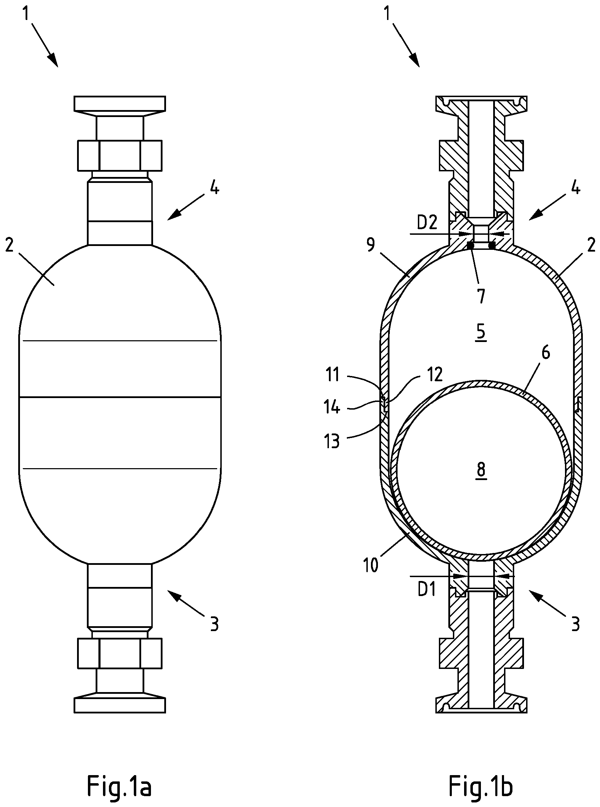

Fig. 1a shows a first embodiment of an air vent valve 1 in a side view.

The air vent valve 1 of this first embodiment comprises a first housing 2, a first inlet 3 and a first outlet 4. The inlet 3 is configured for conveying air and/or liquid medium to a first interior chamber 5 and the outlet 4 is configured for conveying air away from the first interior chamber 5, however, the interior chamber 5 cannot be seen in Fig. 1a.

Fig. 1b shows the air vent valve 1 of Fig. 1a in a sectional side view.

In Fig. 1b the inside of the air vent valve 1 and thus the first interior chamber 5 can be seen. Inside the first interior chamber 5 a first floating member 6 is arranged. The first floating member 6 is movable within the first interior chamber 5 and can be moved up and down. In use the first floating member 6 is moved in particular by liquid medium conveyed in the system comprising the air vent valve 1 and to a certain extend by air which shall be vented and thus removed from the system. In Fig. 1b the first floating member 6 is in the open position, thus not sealing the first outlet 4. In order for the air vent valve 1 to able to vent off air, the first inlet 3 and the first outlet 4 are connected with each other via a fluidic connection through the first interior chamber 5.

When liquid medium is first filled into the system comprising the air vent valve 1, unwanted air in the system can move the first floating member 6 slightly upwards and pass around the first floating member 6 and flow towards the first outlet 4, thus being vented off by the air vent valve. As more and more air is vented off, liquid fluid will fill the first interior chamber 5 and will gradually replace the air inside the first interior chamber 5. During this process the first floating member 6 is moved upwards due to the buoyance forces of the first floating member 6 and the pressure forces of the liquid medium comprised in the system, which forces are directed opposite to the mass forces of the first floating member. Eventually, the first floating member 6 will reach the sealing position, in which the first floating member 6 contacts the first outlet 4, preferably a first sealing 7 arranged at the first outlet 4, and thus closes off the air vent valve.

During an ongoing process, preferably an ongoing (bio)pharmaceutical process, in the system comprising the air vent valve 1 the first floating member 6 is floating in the liquid medium and positioned in the sealing position. If air, for example from air bubbles entrapped in the liquid medium, reaches the air vent valve 1, the air is collected in the first interior chamber 5, preferably underneath the first floating member 6, until the buoyancy forces of the first floating member 6 are reduced to such an extent that the first floating member 6 moves from the sealing position in an open position such that the air can pass around the first floating member 6 and can escape via the first outlet 4 and thus be vented off. When the buoyancy forces of the first floating member 6 are increased enough due air being vented from the first interior chamber 5, the first floating member 6 is moved again into sealing position, thus sealing the first outlet 4. In this way an automatic venting is achieved without the need for sensors, particularly sensors for detecting air in conduits, or complex constructions.

In the embodiment shown in Fig. 1b, the first floating member 6 has an interior cavity 8 which comprises more than 60 % of the volume of the first floating member 6. The share of the volume of the interior cavity 8 of the overall volume of the first floating member 6 can be used to adjust the buoyancy forces of the first floating member 6 and thus adapt the air vent valve 1 for certain applications and/or boundary conditions, for example for certain pressure ranges of the liquid medium. The first floating member 6 does not even have to have an interior cavity 8 but can also be designed solid, thus without a respective interior cavity 8. In order to adapt the air vent valve 1 for certain applications and/or boundary conditions the volume of the first floating member 6 can also be set to a certain ratio with respect to the volume of the first interior chamber 5. In the shown embodiment the volume of the first floating member 6 is at least 50 % of the volume of the first interior chamber 5. In this way the ratio between the buoyancy forces and expected pressure forces can be set to a certain range.

In order to use the air vent valve 1 as a single-use air vent valve 1, the first housing 2 and/or the first floating member 6 are made of plastics and manufactured by additive manufacturing and/or injection molding. This allows for an easy and cheap manufacturing of the air vent valve 1. However, it is also conceivable that the first housing 2 and/or the first floating member 6 are made from steal, thus being suited for a multiple-use application.

In the shown first embodiment the first housing 2 comprises a first housing part 9 and a second housing part 10. The two housing parts 9, 10 are connected to each other via a first connection groove 11 and a first connection projection 12 on the first housing part 9 and a second connection groove 13 and a second connection projection 14 on the second housing part 10. However, other ways of connecting the two housing parts 9, 10 are alternatively or in addition conceivable, for example by welding, adhesive bonding and/or a threaded connection. By providing two housing parts 9, 10, the first housing 2 and the first interior chamber 5 can be manufactured more easily and the first floating member 6 can be easily placed inside the first interior chamber 5.

The first floating member 6 of the shown first embodiment is shaped spherical, which on the hand increases the stability of the first floating member 6 and on the other hand also allows for a convenient sealing of the first outlet 4. The latter is in particular the case when the first interior chamber 5, in particular the end of the interior chamber 5 to which the first outlet 4 is connected to, is also shaped spherical. In the shown embodiment the other end of the first interior chamber 5 is also shaped spherical 5, thus allowing for an evenly distributed contact of the first floating member 6 with the sidewall of the interior chamber 5, when no liquid medium is in the air vent valve 1. The middle section of the first interior chamber 5 as well as the middle section of the first housing 2 is however shaped cylindrical, thus allowing for an elongated but at the same time stable interior chamber 5 and first housing 2. Moreover, the first housing is adjacent to the two ends of the associated first interior chamber 5 formed spherical, which provides good stability for the first housing 2.

Furthermore, the diameter D1 of the first inlet 3 and the diameter D2 of the first outlet 4 can be adjusted to achieve certain technical effects. Adjusting the diameter D1 of the first inlet 3 can for example be used to adjust the air entry into the air vent valve 1, in particular the first interior chamber 5. Adjusting the diameter D2 of the first outlet 4 can be used to adjust the sealing pressure, in particular on the first sealing 7. In the shown embodiment the diameter D2 of the first outlet 4 adjacent to the first interior chamber 5 is smaller than the diameter D1 of the first inlet 3 at least adjacent to the first interior chamber 5. Moreover, the diameter D2 of the first outlet 4 adjacent to the first interior chamber 5 is smaller than the diameter of the first outlet 4 further upstream of the first interior chamber 5. In this way a large amount of air can enter the first interior chamber 5 while providing a rather high sealing pressure.

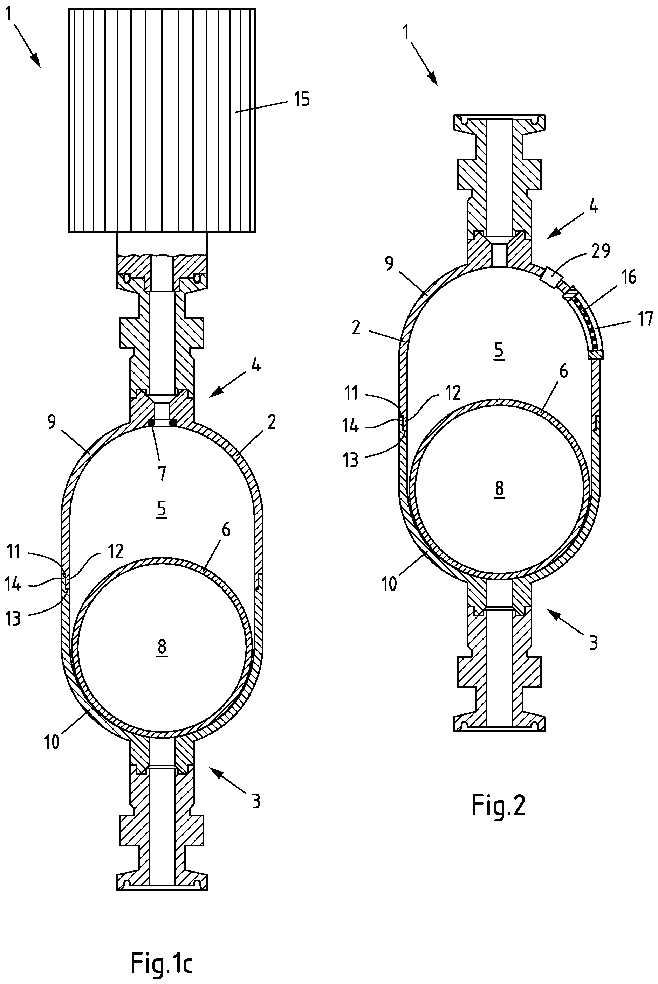

Fig. 1c shows the air vent valve 1 of Fig. 1a in a sectional side view with an additional air filter 15.

The air filter 15 is provided for bacteria, fungal spore and/or virus removal and connected to the first outlet 4 via a fluidic connection. In this way contamination of the liquid medium provided in the system comprising the air vent valve 1 is avoided and the liquid medium is securely kept sterile, even if air is vented off by the air vent valve 1. The air filter has preferably a pore size of at most 0.2 µm and the filtration efficiency that corresponds to the standard according to norm ASTM F838-20.

Fig. 2 shows a second embodiment of an air vent valve 1 in a sectional side view. The air vent valve 1 of the first embodiment of Fig. 1a to 1c and of the second embodiment of Fig. 2 correspond to a certain to extend to each other. Thus, reference is made in the following in particular with regard to the differences compared to the air vent valve 1 of the first embodiment. In addition, parts corresponding to parts of the air vent valve 1 of the previous embodiment are labelled with the same reference signs.

The air vent valve 1, in particular the first housing 2, of the second embodiment additionally comprises a membrane 16, which membrane 16 is connected to the first interior chamber 5 as well as the ambient air via a fluidic connection. Via this membrane 16 air can additionally be vented from the air vent valve 1. In order to protect the membrane 16 a protective mesh 17 is arranged adjacent to the membrane 16 and on both sides of the membrane 16. However, the protective mesh 17 can also be dispensed with. In the shown embodiment the membrane has a pore size of 0.2 µm to 10 µm, which allows for the air to escape from the air vent valve 1, however not the liquid medium. The membrane 16 is made of a polyamide fleece and with an acrylic copolymer arranged at least in sections within the cavities of the fleece.

In addition, in the second embodiment no first sealing 7 is provided, however, a first sealing 7 could also be arranged in this embodiment at the first outlet 4.

Moreover, the air vent valve 1 comprises a monitoring device 29 for determining whether the air vent valve 1 is closed off or open, in particular the monitoring device 29 is configured to determine the position of the first floating member 6 within the respective associated first interior chamber 5.

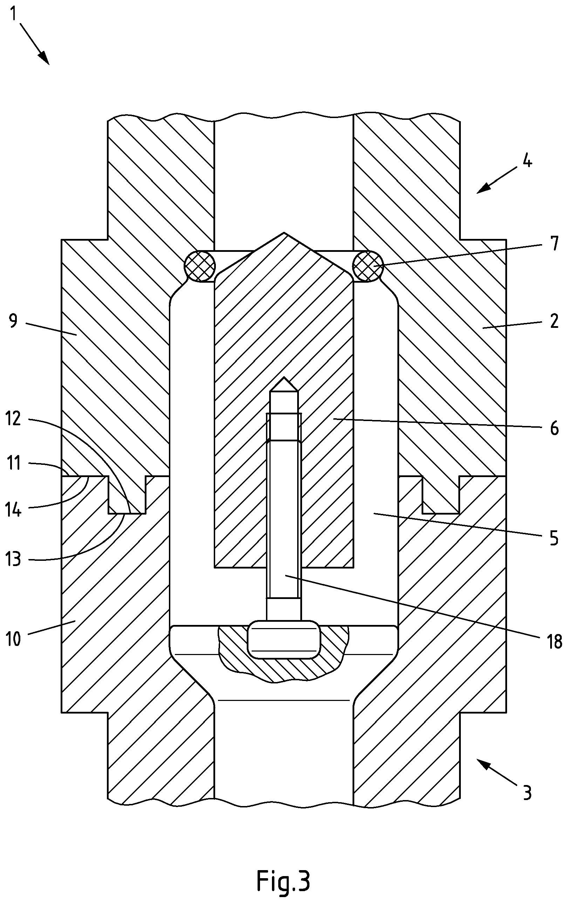

Fig. 3 shows a third embodiment of an air vent valve 1 in a sectional side view. The air vent valve 1 of the first embodiment of Fig. 1a to 1c and of the third embodiment of Fig. 3 correspond to a certain to extend to each other. Thus, reference is made in the following in particular with regard to the differences compared to the air vent valve 1 of the first embodiment. In addition, parts corresponding to parts of the air vent valve 1 of the previous embodiments are labelled with the same reference signs.

In the third embodiment the air vent valve 1 comprises a first guide bar 18 which is arranged inside the first interior chamber 5. The first floating member 6 is mounted slidable along the first guide bar 18. The first guide bar 18 stabilizes the movement of the first floating member 6, which in turn improves the sealing capabilities of the first floating member 6.

In addition, in the air vent valve 1 of the third embodiment, both ends of the first interior chamber 5 are shaped at least in sections conical which also provides a stable first interior chamber 5, however, is easier to produce and helps to guide the air around the now at least in sections cylindrical and cone-shaped first floating member 6. The first floating member 6 is in the embodiment shown on one end cone-shaped, which allows for a reliable sealing. In addition, the cone-shape is easy to produce, in particular compared to a spherical shape. The cylindrical shape of the first floating member 6 helps to reduce the thickness of the air vent valve 1, this also applies for the cylindrical middle section of the first interior chamber 5 and the cylindrical middle section of the first housing 2.

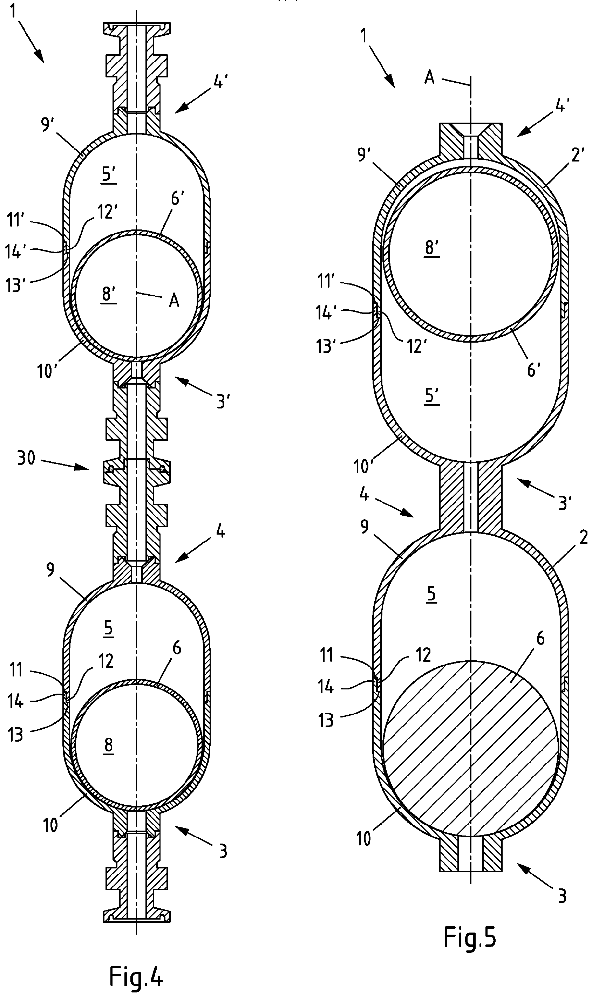

Fig. 4 shows a fourth embodiment of an air vent valve 1 in a sectional side view. The air vent valve 1 of the first embodiment of Fig. 1a to 1c and of the fourth embodiment of Fig. 4 correspond to a certain to extend to each other. Thus, reference is made in the following in particular with regard to the differences compared to the air vent valve 1 of the first embodiment. In addition, parts corresponding to parts of the air vent valve 1 of the previous embodiments are labelled with the same reference signs. In addition, parts of the second sub-part of the air vent valve 1 corresponding to the first sub-part of the air vent valve 1 are labelled with the same reference sign with an additional apostrophe.

The air vent valve 1 of the fourth embodiment comprises, among other things, two housings 2, 2', a first housing 2 and a second housing 2', two inlets 3, 3', a first inlet 3 and a second inlet 3', two outlets 4, 4', a first outlet 4 and a second outlet 4', two interior chambers 5, 5', a first interior chamber 5 and a second interior chamber 5', as well as two floating members 6, 6', a first floating member 6 and a second floating member 6'. The respective parts of the air vent valve 1 are arranged along the axis of extension A of the air vent valve 1, wherein the first interior chamber 5 and the second interior chamber 5' are both arranged on the axis of extension A.

In the fourth embodiment shown in Fig. 4 the first outlet 4 is connected to the second inlet 3' via a fluidic connection and the first interior chamber 5 is connected to the second interior chamber 5' via a fluidic connection. Air and liquid medium can thus be transferred from the first interior chamber 5 to the second interior chamber 5'. Moreover, the first outlet 4 and the second inlet 3' are detachably connected to each other, thus allowing for stacking and disconnecting different sub parts of the air vent valve 1 at will. However, this can lead to a higher overall length of the air vent valve 1, as space is needed to provide a respective detachable connection 30 between first outlet 4 and the second inlet 3'.

In the shown embodiment the two floating members 6, 6' are designed substantially identical with respect to each other, however, it is also conceivable that one of the floating members 6, 6' has a smaller interior cavity 8, 8' or even no interior cavity 8, 8' at all. In this way the different floating members 6, 6' can be adapted for different pressure ranges of the liquid medium.

Moreover, the air vent valve 1 of this fourth embodiment is basically two air vent valves 1 of the first embodiment connected with each other. However, it is also conceivable that the different sub-parts of the air vent valve 1 are designed to at least a certain extend different.

Fig. 5 shows a fifth embodiment of an air vent valve 1 in a sectional side view. The air vent valve 1 of the fourth embodiment of Fig. 4 and of the fifth embodiment of Fig. 5 correspond to a certain extent to each other. Thus, reference is made in the following in particular with regard to the differences compared to the air vent valve 1 of the fourth embodiment. In addition, parts corresponding to parts of the air vent valve 1 of the previous embodiments are labelled with the same reference signs. In addition, parts of the second sub-part of the air vent valve 1 corresponding to the first sub-part of the air vent valve 1 are labelled with the same reference sign with an additional apostrophe.

In this fifth embodiment the first outlet 4 and the second inlet 3' are integrally connected to each, thus allowing for a more compact design of the air vent valve 1.

Moreover, the first floating member 6 is designed solid, wherein the second floating member 6' comprises an interior cavity 8'. The mass of the first floating member 6 is thus higher than the mass of the second floating member 6'. Thus, the different floating members 6, 6' are configured for different pressure ranges of the liquid medium, therefore allowing sealing and/or venting at different pressure ranges of the liquid medium.

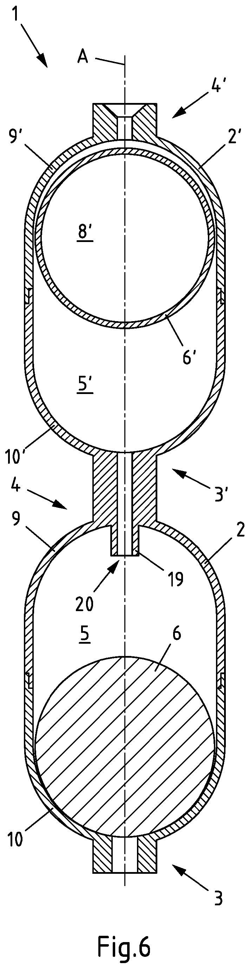

Fig. 6 shows a sixth embodiment of an air vent valve 1 in a sectional side view. The air vent valve 1 of the fifth embodiment of Fig. 5 and of the sixth embodiment of Fig. 6 correspond to a certain extent to each other. Thus, reference is made in the following in particular with regard to the differences compared to the air vent valve 1 of the fifth embodiment. In addition, parts corresponding to parts of the air vent valve 1 of the previous embodiments are labelled with the same reference signs. In addition, parts of the second sub-part of the air vent valve 1 corresponding to the first sub-part of the air vent valve 1 are labelled with the same reference sign with an additional apostrophe.

In the sixth embodiment the first sub-part of the air vent valve 1 comprises a first projection 19 projecting from the first housing 2 into the first interior chamber 5. The first projection 19 has a first cavity 20 connected to the first outlet 4 and the first interior chamber 5 respectively via a fluidic connection. The first projection 19 can for example be stiffer than the first housing 2 and/or the first floating member 6, thus being less prone to being compressed by the first floating member 6, for example when the first floating member 6 is moved to the sealing position. As a result, air can be provided in the cavity 20, which air helps dampen movements of the floating member 6. It can also be provided that first projection 19 can for example be less stiff than the first housing 2 and/or the first floating member 6. In this case, a deformation of the first projection 19 can dampen a movement of the first floating member 6. Though not shown in the sixth embodiment, there could also be provided a second projection projecting form the second housing 2', which second projection can be designed as the first projection 19.

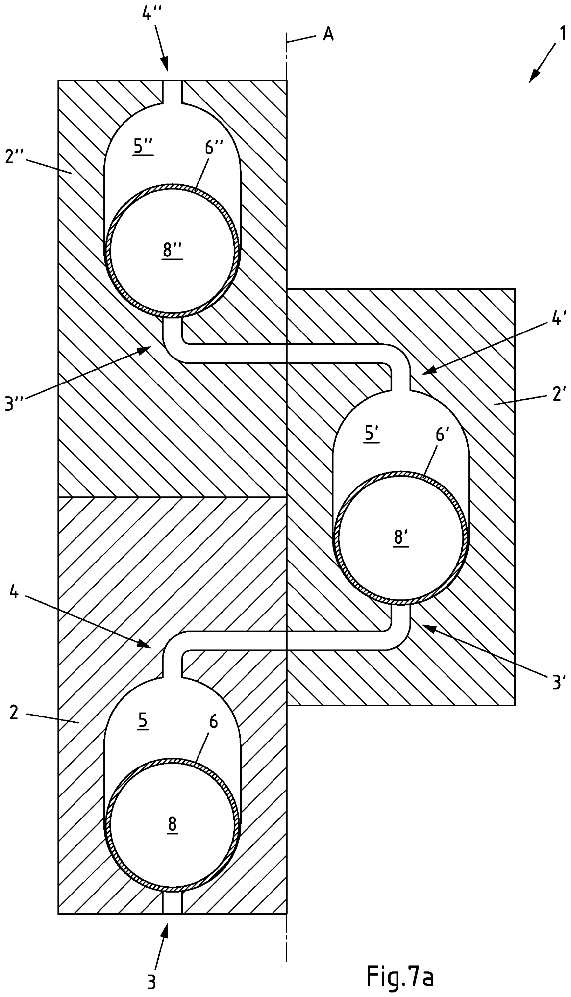

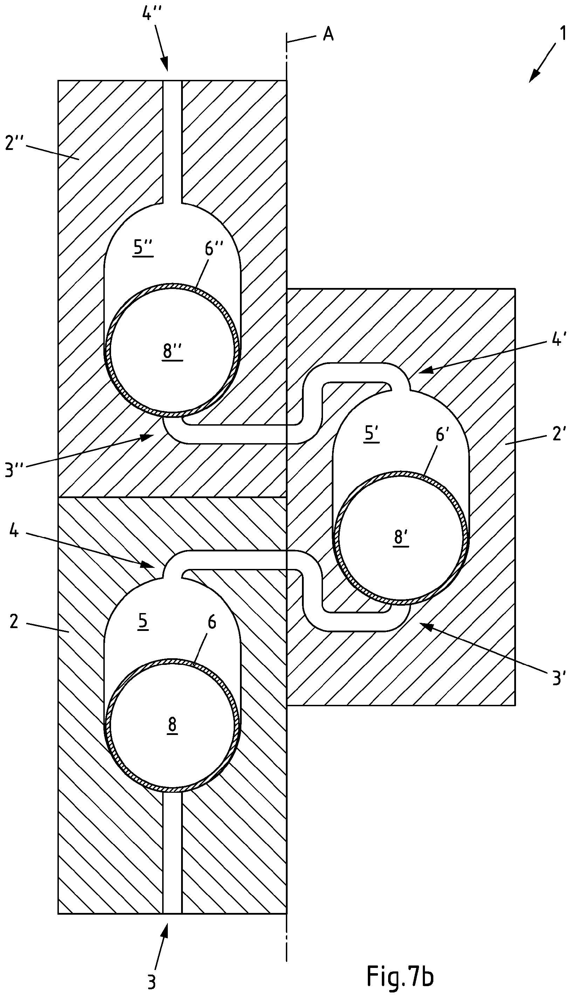

Fig. 7a shows a seventh embodiment of an air vent valve 1 in a sectional side view. The air vent valve 1 of the seventh embodiment of Fig. 7 and of the fourth embodiment of

Fig. 4 correspond to a certain extent to each other. Thus, reference is made in the following in particular with regard to the differences compared to the air vent valve 1 of the fourth embodiment. In addition, parts corresponding to parts of the air vent valve 1 of the previous embodiments are labelled with the same reference signs. In addition, parts of the second sub-part or third sub-part of the air vent valve 1 corresponding to the first sub-part of the air vent valve 1 are labelled with the same reference sign with one or respectively two additional apostrophes.

The air vent valve 1 of the seventh embodiment comprises among other things three housings 2, 2', 2", three inlets 3, 3', 3", three outlets 4, 4', 4", three interior chambers 5, 5', 5" and three floating members 6, 6', 6". In the embodiment shown the first outlet 4 is connected to the second inlet 3' via a fluidic connection, the second outlet 4' is connected to the third inlet 3" via a fluidic connection, the first interior chamber 5 is connected to the second interior chamber 5" via a fluidic connection and the second interior chamber 5' is connected to the third interior chamber 5" via a fluidic connection. This design allows for liquid medium as well as air entering via the first inlet 3 to be transferred from the first interior chamber 5, to the second interior chamber 5' and from there to the third interior chamber 5" to be eventually vented via the third outlet 4".

In the shown embodiment the three floating members 6, 6', 6" are designed substantially identical. However, it is also conceivable that the mass of the first floating member 6 is higher than the mass of the second floating member 6' and of the third floating member 6" and the mass of the second floating member 6' is lower than the mass of the first floating member 6 and higher than the mass of the third floating member 6". In this way each floating member is adapted for a different pressure range of the liquid medium.

In the shown embodiment the second housing 2' and the second interior chamber 5' is arranged at least in sections laterally offset with respect to the first housing 2 and the first interior chamber 5 and the third housing 2" and the third interior chamber 5" is arranged at least in sections laterally offset with respect to the second housing 2' and the second interior chamber 5'. The different housings 2, 2', 2" and interior chambers 5, 5', 5" are thus arranged in a zig-zag pattern relative to each other. In this way a compact air vent valve 1 can be provided, even though the air vent valve 1 comprises several housings 2, 2', 2", interior chambers 5, 5', 5" and floating members 6, 6', 6".

The arrangement shown in Fig. 7a can also be described in relation to the axis of extension A of the air vent valve 1: The second housing 2' and the third housing 2" are spaced apart from the first housing 2 along the axis of extension A. In addition, the second interior chamber 5' and the third interior chamber 5" are spaced apart from the first interior chamber 5 along the axis of extension A. The second housing 2' is radially spaced apart with respect to the axis of extension A at least in sections from the first housing 2 and the third housing 2". Moreover, the second interior chamber 5' is radially spaced apart with respect to the axis of extension A at least in sections from the first interior 5 chamber and the third interior chamber 5", while the first housing 2 and the third housing 2" as well as the first interior chamber 5 and the third interior chamber 5" are respectively positioned radially equally with respect to axis of extension.

Fig. 7b shows a modification of the seventh embodiment of an air vent valve 1 in a sectional side view.

In this modification it is provided that along the axis of extension A the first outlet 4 is arranged at least in sections higher than the second inlet 3' and the second outlet 4' is arranged at least in sections higher than the third inlet 3". In this way it can be provided that a certain amount of liquid medium remains in the second interior 5' chamber and the third interior chamber 5", even if the previous interior chamber 5, 5' is at least temporarily not fully filled with liquid medium.

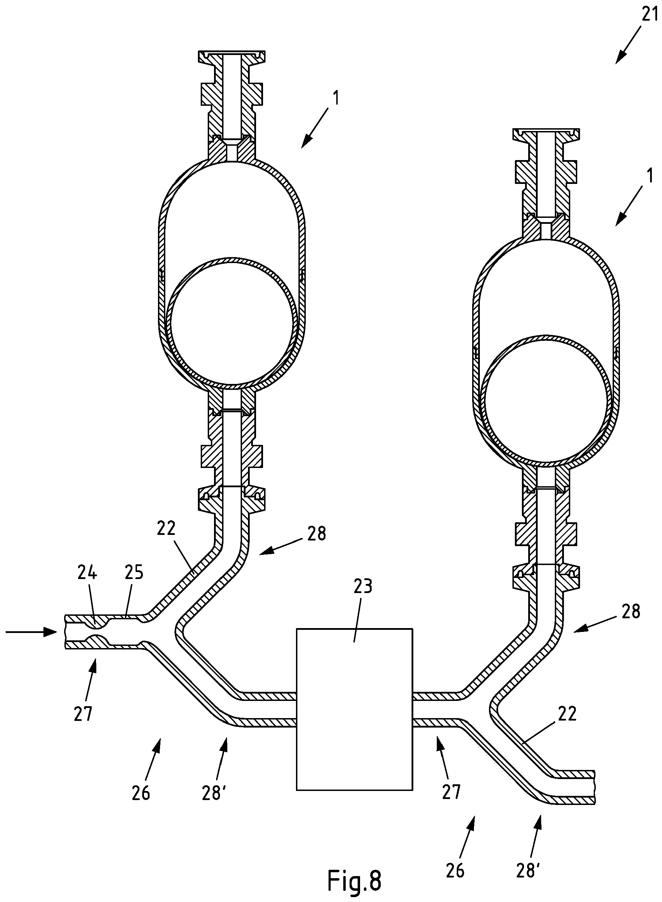

Fig. 8 shows a first embodiment of an air vent system 21 in a sectional side view.

The air vent system 21 comprises two air vent valves 1, wherein the air vent valves 1 correspond respectively to the air vent valve 1 of the first embodiment shown in Fig. 1. However, more or less air vent valves 1 and/or air vent valves 1 of different design are also conceivable. The air vent valves 1 as well as the entire air vent system 21 are intended for use in a (bio)pharmaceutical process, in particular an automatized processing or production process of a (bio)pharmaceutical product. The air vent system 21 can for example be used in a system for separation and/or purification of a one or more target molecules comprising a filtration and/or diafiltration unit, preferably a tangential flow filtration unit. However, other uses are also conceivable.

The air vent system 21 in addition also comprises a conduit 22 for conveying liquid medium and a consuming device 23 for consuming the liquid medium conveyed by the conduit 22. The consuming device 23 can for example be the previously described filtration and/or diafiltration unit. However, other consuming devices 23, for example a bioreactor or a chromatographic separation unit, are also conceivable.

In the shown air vent system 21 the conduit 22 has a cross-section reduction 24 upstream of and adjacent to the air vent valve 1 upstream of the consuming device 23 and a cross-section enlargement 25 downstream of the cross-section reduction 24 compared to the cross-section of the conduit 22 upstream of the cross-section reduction 24. This helps extracting air contained in the liquid medium as well as reducing the flow speed of the liquid medium towards the air vent valve 1 upstream of the consuming device 23, which increases the time the air has to flow towards the air vent valve 1. In the air vent system 21 the other air vent valve 1 is arranged downstream of the consuming device 23, which helps to reduce foaming after the processing of the liquid medium in the consuming device 23. Upstream of this air vent valve 1 and downstream of the consuming device 23 a respective cross-section reduction 24 and cross-section enlargement 25 could also be provided.

The conduit 22 of the air vent system 21 has also an intersection 26 for each air vent valve 1, wherein each intersection as an inflow section 27 and at least two outflow sections 28, 28'. The air vent valves 1 are connected via a fluidic connection to the first outflow section 28 of the respective intersection 26 and the consuming device is connected via a fluidic connection to the second outflow section 28' of the upstream intersection 26.

In the shown embodiment the intersection is Y-shaped, which helps guiding air towards the respective air vent valve 1, however, needs more space. The first outflow section 28 is designed for conveying the liquid medium against the gravity and thus upward and the second outflow section 28' is designed for conveying the liquid medium at least in sections with the gravity and thus downward. This also helps guiding air towards the respective air vent valves 1 and not towards the consuming device 23 in a constructive simple manner.

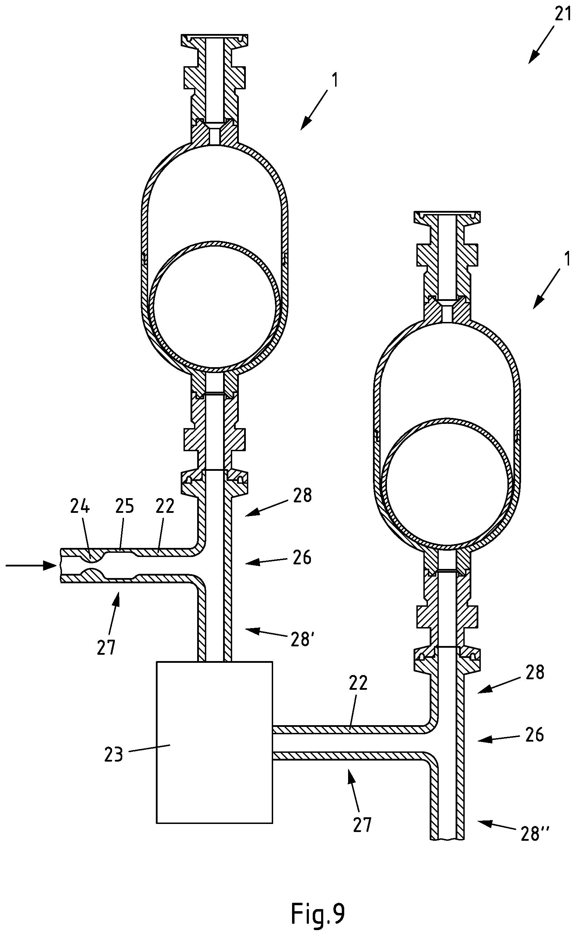

Fig. 9 shows a second embodiment of an air vent system 21 in a sectional side view. The air vent system 21 of the first embodiment of Fig. 8 and of the second embodiment of Fig. 9 correspond to a certain extent to each other. Thus, reference is made in the following in particular with regard to the differences compared to the air vent system 21 of the first embodiment. In addition, parts corresponding to parts of the air vent system 21 of the previous embodiment are labelled with the same reference signs.

The air vent system of the second embodiment comprises instead of Y-shaped intersections 26 T-shaped intersections. These intersections 26 are more compact, however, it can be the case that air is more likely guided towards the respective air vent valve 1 via the second outflow section 28'.

### List of reference signs

- 1: Air vent valve
- 2: First housing
- 2': Second housing
- 2": Third housing
- 3: First inlet
- 3': Second inlet
- 3": Third inlet
- 4: First outlet
- 4': Second outlet
- 4": Third outlet
- 5: First interior chamber
- 5': Second interior chamber
- 5": Third interior chamber
- 6: First floating member
- 6': Second floating member
- 6": Third floating member
- 7: First sealing
- 8, 8', 8": Interior cavity
- 9, 9': First housing part
- 10, 10': Second housing part
- 11, 11': First connection groove
- 12, 12': First connection projection
- 13, 13': Second connection groove
- 14, 14': Second connection projection
- 15: Filter
- 16: Membrane
- 17: Mesh
- 18: First guide bar
- 19: First projection
- 20: First cavity
- 21: Air vent system
- 22: Conduit
- 23: Consuming device
- 24: Cross-section reduction
- 25: Cross-section enlargement
- 26: Intersection
- 27: Inflow section
- 28: First outflow section
- 28': Second outflow section
- 29: Monitoring device
- 30: Detachable connection

- A: Axis of extension
- D 1: Diameter of the first inlet
- D2: Diameter of the first outlet

## Claims

1. Air vent valve (1) for the use in a (bio)pharmaceutical process, comprising:
- a first housing (2),
- a first interior chamber (5) arranged within the first housing,
- a first inlet (3) for conveying air and/or liquid medium to the first interior chamber (5),
- a first outlet (4) for conveying air away from the first interior chamber (5), and
- a first floating member (6) for sealing the first outlet (4),
- wherein the first inlet (3) and the first outlet (3) are respectively connected via a fluidic connection with the first interior chamber (5), and
- wherein the first floating member (6) is arranged movable within the first interior chamber (5).

2. Air vent valve (1) according to claim 1,
**characterized by**
- a second housing (2'), a second interior chamber (5') arranged within the second housing (2'), a second inlet (3') for conveying air and/or liquid medium to the second interior chamber (5'), a second outlet (4') for conveying air away from the second interior chamber (5'), and a second floating member (6') for sealing the second outlet (4'), wherein the second inlet (3') and the second outlet (4') are respectively connected via a fluidic connection with the second interior chamber (5'), and wherein the second floating member (6') is arranged movable within the second interior chamber (5'), and/or
- a third housing (2"), a third interior chamber (5") arranged within the third housing (2"), a third inlet for conveying air (3") and/or liquid medium to the third interior chamber (5"), a third outlet (4") for conveying air away from the third interior chamber (5"), and a third floating member (6") for sealing the third outlet (4"), wherein the third inlet (3") and the third outlet (3") are respectively connected via a fluidic connection with the third interior chamber (5"), and wherein the third floating member (6") is arranged movable within the third interior chamber (5").

3. Air vent valve (1) according to claim 2,
**characterized in that**
- the first outlet (4) is connected to the second inlet (3') via a fluidic connection, the second outlet (4') is connected to the third inlet (3") via a fluidic connection, the first interior chamber (5) is connected to the second interior chamber (5') via a fluidic connection and/or the second interior chamber (5') is connected to the third interior chamber (5") via a fluidic connection,
- **in that** the first outlet (4) and the second inlet (3') are integrally connected to each other and/or the second outlet (4') and the third inlet (3") are integrally connected to each other, and/or
- **in that** the first outlet (4) and the second inlet (3') are detachably connected to each other and/or the second outlet (4') and the third inlet (3") are detachably connected to each other.

4. Air vent valve (1) according to claim 2 or claim 3,
**characterized in that**
- the second housing (2') and/or the second interior chamber (5') is arranged at least in sections laterally offset with respect to the first housing (2) and/or the first interior chamber (5),
- **in that** the third housing (2") and/or the third interior chamber (5") is arranged at least in sections laterally offset with respect to the second housing (2') and/or the second interior chamber (5'), and/or
- **in that** the first housing (2), the second housing (2') and the third housing (2") are arranged in a zig-zag pattern relative to each other and/or the first interior chamber (5), the second interior chamber (5') and the third interior chamber (5") are arranged in a zig-zag pattern relative to each other.

5. Air vent valve (1) according to any one of claims 1 to 4,
**characterized by**
- a first projection (19) projecting from the first housing (2) into the first interior chamber (5), wherein the first projection (19) has a first cavity (20) connected to the first outlet (4) and the first interior chamber (5) respectively via a fluidic connection, and wherein, preferably, the first projection (19) is at least in sections stiffer than the first housing (2) and/or the first floating member (6) and/or the first projection (19) is at least in sections less stiff than the first housing (2) and/or the first floating member (6),
- a second projection projecting from the second housing (2') into the second interior chamber (5'), wherein the second projection has a second cavity connected to the second outlet (4') and the second interior chamber (5') respectively via a fluidic connection, and wherein, preferably, the second projection is at least in sections stiffer than the second housing (2') and/or the second floating member (6') or the second projection is at least in sections less stiff than the second housing (2') and/or the second floating member (6'), and/or
- a third projection projecting from the third housing (2") into the third interior chamber (5"), wherein the third projection has a third cavity connected to the third outlet (4") and the third interior chamber (5") respectively via a fluidic connection, and wherein, preferably, the third projection is at least in sections stiffer than the third housing (2") and/or the third floating member (6") or the third projection is at least in sections less stiff than the third housing (2") and/or the third floating member (6").

6. Air vent valve (1) according to any one of claims 1 to 5,
**characterized in that**
- the mass of the first floating member (6) is higher than the mass of the second floating member (6') and/or the third floating member (6"),
- **in that** the mass of the second floating member (6') is lower than the mass of the first floating member (6) and/or higher than the mass of the third floating member (6"),
- **in that** the first floating member (6), the second floating member (6') and/or the third floating member (6") respectively comprise an interior cavity (8, 8', 8"), wherein, preferably, the interior cavity (8, 8', 8") comprises at least 30 %, preferably at least 60 %, in particular at least 95 %, of the volume of the respective floating member (6, 6', 6"), and/or
- **in that** the first floating member (6), the second floating member (6') and/or the third floating member (6") is respectively designed solid.

7. Air vent valve (1) according to any one of claims 1 to 6,
**characterized in that**
- the first floating member (6), the second floating member (6') and/or the third floating member (6") is respectively at least in sections, preferably entirely, shaped spherical,
- **in that** the first floating member (6), the second floating member (6') and/or the third floating member (6"), preferably a first end of the first floating member (6), the second floating (6') member and/or the third floating member (6") for closing off the respective associated outlet (4, 4', 4"), is respectively at least in sections cone-shaped,
- **in that** the first floating member (6), the second floating member (6') and/or the third floating member (6"), preferably a second end of the first floating (6) member, the second floating member (6') and/or the third floating member (6"), is respectively at least in sections cylindrical shaped,
- **in that** the volume of the first floating member (6), the second floating member (6') and/or the third floating member (6") is at least 20 %, preferably at least 50 %, in particular at least 90 %, of the volume of the respective associated interior chamber (5, 5', 5"),
- **in that** the first interior chamber (5), the second interior chamber (5') and/or the third interior chamber (5"), preferably at least one end, in particular two ends, of the first interior chamber (5), the second interior chamber (5') and/or the third interior chamber (5"), is respectively at least in sections shaped spherical and/or conical,
- **in that** the first interior chamber (5), the second interior chamber (5') and/or the third interior chamber (5"), preferably at least one middle section of the first interior chamber (5), the second interior chamber (5') and/or the third interior chamber (5"), is respectively at least in sections shaped cylindrical,
- **in that** the first housing (2), the second housing (2') and/or the third housing (2") is adjacent to at least one end, preferably two ends, of the respective housing (2, 2', 2") and/or associated interior chamber (5, 5', 5") respectively at least in sections shaped spherical and/or conical, and/or
- **in that** the first housing (2), the second housing (2') and/or the third housing (2"), preferably at least one middle section of the first housing (2), the second housing (2') and/or the third housing (2"), is respectively at least in sections shaped cylindrical.

8. Air vent valve (1) according to any one of claims 1 to 7,
**characterized by**
- a first guide bar (18) arranged at least in sections within the first interior chamber (5), wherein the first floating member (6) is mounted slidable along the first guide bar (18),
- a second guide bar arranged at least in sections within the second interior (5') chamber, wherein the second floating member (6") is mounted slidable along the second guide bar,
- a third guide bar arranged at least in sections within the third interior chamber (5"), wherein the third floating member (6") is mounted slidable along the third guide bar,
- a first sealing (7) to be contacted by the first floating member (6), wherein the first sealing (7) is arranged at least in sections within the first interior chamber (5) and/or the first outlet (4),
- a second sealing to be contacted by the second floating member (6'), wherein the second sealing is arranged at least in sections within the second interior chamber (5') and/or the second outlet (4'), and/or
- a third sealing to be contacted by the third floating member (6"), wherein the third sealing is arranged at least in sections within the third interior chamber (5") and/or the third outlet (4").

9. Air vent valve (1) according to any one of claims 1 to 8,
**characterized in that**
- the first housing (2), the second housing (2'), the third housing (2"), the first floating member (6), the second floating member (6') and/or the third floating member (6") are respectively at least in sections manufactured by additive manufacturing and/or injection molding, and/or
- **in that** the first housing (2), the second housing (2'), the third housing (2"), the first floating member (6), the second floating member (6') and/or the third floating member (6") are respectively at least in sections made of metal, preferably steel, and/or plastics, preferably polycarbonate and/or polyamide.

10. Air vent valve (1) according to any one of claims 1 to 9,
**characterized in that**
the first housing (2), the second housing (2') and/or the third housing (2") respectively comprises a first housing (9, 9') part and a second housing part (10, 10') and **in that**
- the first housing part (9, 9') and the second housing part (10, 10') of the respective housing (2, 2', 2") are connected to each other, preferably by bonding, in particular adhesive bonding, welding, flange connection, threaded connection, clamping connection, push-connection and/or by a snap-on connection, and/or
- the respective first housing part (9, 9') comprises a first connection groove (11, 11') and/or a first connection projection (12, 12') and/or the respective second housing part (10, 10') comprises a second connection groove (13, 13') and/or a second connection projection (14, 14').

11. Air vent valve (1) according to any one of claims 1 to 10,
**characterized in that**
- the air vent valve (1) comprises an air filter (15), preferably for bacteria, fungal spore and/or virus removal, connected to the first outlet (4), the second outlet (4') and/or the third outlet (4") via a fluidic connection, wherein, preferably, the air filter (15) has a pore size of at most 0.45 µm, preferably at most 0.2 µm, in particular at most 0.1 µm, and/or wherein, preferably, the air filter (15) has a filtration efficiency that corresponds to the standard according to norm ASTM F838-20, and/or
- **in that** the air vent valve (1) comprises a monitoring device (29) for determining whether the air vent valve (1) is closed off or open, wherein, preferably, the monitoring device (1) is configured to determine the position of the first floating member (6), the second floating member (6') and/or the third floating member (6") within the respective associated interior chamber (5, 5' 5").

12. Air vent valve (1) according to any one of claims 1 to 11,
**characterized in that**
the first housing (2), the second housing (2') and/or the third housing (2") comprises respectively a membrane (16), preferably connected to the respective associated interior chamber (5, 5', 5") and/or the ambient air via a fluidic connection, and **in that**, preferably,
- the membrane (16) comprises a substrate made at least in sections of a plastic fleece, preferably a polyamide fleece, and, preferably, an acrylic copolymer arranged at least in sections within the cavities of the fleece,
- the membrane (16) has a pore size of at least 0.05 µm, preferably at least 0.1 µm, more preferably at least 0.2 µm, in particular at least 0.5 µm and/or of at most 15 µm, preferably at most 12.5 µm, more preferably at most 10 µm, in particular at most 7.5 µm, and/or
- a protective mesh (17) is arranged adjacent to, preferably in contact with, the membrane (16).

13. Air vent system (21) for the use in a (bio)pharmaceutical process, comprising:
- a conduit (22) for conveying liquid medium,
- one or more air vent valves (1) connected to the conduit (22) via a fluidic connection, and
- a consuming device (23), preferably a chemical reactor, a bioreactor, a filtration system and/or a chromatographic separation system, for consuming liquid medium conveyed by the conduit (22),
**characterized in that**
the one or more air vent valves (1) are air vent valves (1) according to any one of claims 1 to 12.

14. Air vent system (21) according to claim 13,
**characterized in that**
- the conduit (22) has a cross-section reduction (24) upstream of and/or adjacent to at least one air vent valve of the one or more air vent valves (1) and, preferably, a cross-section enlargement (25) downstream of the cross-section reduction (24) compared to the cross-section of the conduit (22) upstream of the cross-section reduction, and/or
- **in that** at least one of the one or more air vent valves (1) is connected via a fluidic connection to the conduit (22) upstream of the consuming device (23) and/or at least one of the one or more air vent valves (1) is connected via a fluidic connection to the conduit (22) downstream of the consuming device (23).

15. Air vent system (21) according to claim 13 or claim 14,
**characterized in that**
- the conduit (22) has one or more intersections (26),
- **in that** the one or more intersections (26) have respectively at least one inflow section (27) and at least two outflow sections (28, 28'),
- **in that** the one or more intersections (26) are T-shaped and/or Y-shaped,
- **in that** a first outflow section (28) of the at least two outflow sections (28, 28') is designed for conveying liquid medium at least in sections against the gravity and/or upward and/or a second outflow section (28') of the at least two outflow sections (28, 28') is designed for conveying liquid medium at least in sections with the gravity and/or downward, and
- **in that** at least one of the one or more air vent valves (1) is connected via a fluidic connection to the first outflow section (28) and/or the consuming device (23) is connected via a fluidic connection to the second outflow section (28').

16. Use of an air vent valve (1) as defined in any one of claims 1 to 12, preferably use of an air vent system (21) as defined in any one of claims 13 to 15, for the automatized processing or production process of a (bio)pharmaceutical product, wherein the process is conducted
- at least partially in a system for separation and/or purification of a one or more target molecule comprising a filtration and/or diafiltration unit, preferably a tangential flow filtration unit, and/or a chromatography unit and/or
- at least partially in a system for buffer exchange and/or concentration of one or more target molecule in a diafiltration unit.

17. Use of an air vent valve (1), preferably air vent system (21), according to claim 16,
- wherein the air vent valve (1), preferably the first interior chamber (5), the second interior chamber (5'), the third interior chamber (5"), the first floating member (6), the second floating member (6') and/or the third floating member (6"), is at least in section sterilized, preferably by gamma irradiation and/or steam autoclaving,
- wherein two liquid mediums with different density are provided within the air vent system (21),
- wherein the pressure in the air vent system (21), preferably in the conduit (22), the one or more air vent valves (1) and/or the consuming device (23), is at 0 bar, preferably at least 2 bar, in particular at least 4 bar and/or at most 8 bar, preferably at most 6 bar, in particular at most 4 bar, and/or
- wherein the temperature in the air vent system (21), preferably in the conduit (22), the one or more air vent valves (1) and/or the consuming device (23), is at least 10 °C, preferably at least 15 °C, in particular at least 20 °C and/or at most 40 °C, preferably at most 30°C, in particular at most 25°C.
